(19) Europäisches Patentamt
European Patent Office
Office européen des brevets

(11) **EP 4 166 784 A1**

(12) **EUROPEAN PATENT APPLICATION**
published in accordance with Art. 153(4) EPC

(43) Date of publication:
**19.04.2023 Bulletin 2023/16**

(21) Application number: **20940019.1**

(22) Date of filing: **11.06.2020**

(51) International Patent Classification (IPC):
**F03G 3/08** (2006.01)

(52) Cooperative Patent Classification (CPC):
**F03G 3/08**

(86) International application number:
**PCT/JP2020/023083**

(87) International publication number:
**WO 2021/250864 (16.12.2021 Gazette 2021/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ishii, Ryo
Tokyo, 167-0021 (JP)**

(72) Inventor: **Ishii, Ryo
Tokyo, 167-0021 (JP)**

(74) Representative: **Berggren Oy
P.O. Box 16
Eteläinen Rautatiekatu 10A
00101 Helsinki (FI)**

(54) **PROPULSIVE FORCE GENERATING DEVICE, AND PROPULSIVE FORCE GENERATION METHOD**

(57)    A propulsive force generating device includes a parent body of rotation rotatably arranged, means for rotationally driving the parent body of rotation at a rotational angular velocity $\omega_0$, n (n $\geq$ 1 integer) child bodies of rotation arranged on the body of rotation and having rotating axes in the circumferential direction of the parent body of rotation, and means for rotationally driving the child bodies of rotation at a rotational angular velocity $\omega_1$ by flexible binding. The rotational angular velocity $\omega_0$ and the rotational angular velocity $\omega_1$ have the same sign and satisfy the following numerical expression:

$$\frac{2\pi^2}{n}\omega_0 \leq \omega_1$$

Fig. 4

(a)

ANGULAR VELOCITY $\omega_0$ OF PARENT ROTOR

DISTANCE r BETWEEN CENTER OF PARENT ROTOR AND CENTER OF CHILD ROTOR

ANGULAR VELOCITY $\omega_1$ OF CHILD ROTOR

10

20

(b)

MASS m AND RADIUS a OF CHILD ROTOR

ANGULAR VELOCITY $\omega_1$

20

**Description**

TECHNICAL FIELD

The present invention relates to a propulsive force generating device and a propulsive force generating method which generate propulsive force by the rotation of a body of rotation.

BACKGROUND ART

As a conventional propulsive force generating device, a rocket or the like discharging a propellant to obtain propulsive force is known.

As other propulsive force generating devices which do not use a propellant, a propulsive force generating device which revolves a body of rotation around an axis different from that of the body of rotation to obtain a propulsive force is proposed (see Patent Documents 1 to 5).

These propulsive force generating devices include a parent rotating body of rotation and a child body of rotation which is arranged on the parent body of rotation, revolves with the parent body of rotation, and rotates in a direction perpendicular to the rotating axis of the parent body of rotation.

[Conventional Art Documents]

[Patent Documents]

[Patent Document 1] Japanese Published Unexamined Application No. 56-106076

[Patent Document 2] Japanese Published Unexamined Application No. 04-19368

[Patent Document 3] Japanese Published Unexamined Application No. 08-270543

[Patent Document 4] Japanese Published Unexamined Application No. 2003-83237

[Patent Document 4] Japanese Published Unexamined Application No. 2004-169691

[SUMMARY OF INVENTION]

[PROBLEMS TO BE SOLVED BY THE INVENTION]

However, since these inventions of the propulsive force generating devices do not sufficiently theoretically considered and experimentally sufficient, it is not sufficiently proofed whether to obtain propulsive force or not.

The inventor considered a mechanical theory of a rotating body of rotation which is being revolved and successfully derived conditions that generated propulsive force. The inventor made a demonstration experiment on the basis of the result and confirm that generation of propulsive force matched to the result of the theoretical consideration. The inventor made the verification experiment twice or more to confirm reproducibility.

The present invention is based on the theoretical consideration and the verification experiment and is to provide a propulsive force generating device and a propulsive force generating method which can efficiently obtain propulsive force from rotational movement of a body of rotation.

[Means to Solve the Problem]

The invention descried in claim 1 to solve the problem is a propulsive force generating device including a parent body of rotation rotatably arranged, means for rotationally driving the parent body of rotation at a rotational angular velocity $\omega_0$, n (n $\geq$ 1 integer) child bodies of rotation arranged on the body of rotation and having rotating axes in the circumferential direction of the parent body of rotation, and means for rotationally driving the child bodies of rotation at a rotational angular velocity $\omega_1$ by flexible binding, wherein, the rotational angular velocity $\omega_0$ and the rotational angular velocity $\omega_1$ have the same sign and satisfy the following numerical expression:

$$\frac{2\pi^2}{n}\omega_0 \leq \omega_1$$

The invention described in claim 2, in the propulsive force generating device described in claim 1, wherein, when an inertia moment of the child body of rotation is defined as $I_1$, a distance from the center of the body of rotation to the center of gravity of the child body of rotation is defined as r, the mass of the child body of rotation is defined as m, and the radius of the child body of rotation is defined as a, propulsive force $F$ in the axial direction of the parent body of rotation is given by:

$$F = \frac{nI_{yy}}{2\pi^2 r}\omega_0^2 = \frac{nma^2}{4\pi^2 r}\omega_0^2$$

The invention described in claim 3 is a propulsive force generating method, wherein, a rotatably arranged parent body of rotation is rotationally driven at a rotational angular velocity $\omega_0$, n (n $\geq$ 1 integer) child bodies of rotation arranged on the parent body of rotation and having rotating axes in the circumferential direction of the parent body of rotation are rotationally driven at a rotational angular velocity $\omega_1$ having the same sign as that of the rotational angular velocity $\omega_0$ of the parent body of rotation by being flexibly bound to means for rotationally driving, and the rotational angular velocity $\omega_0$ and the rotational angular velocity $\omega_1$ have the same sign and satisfy the following numerical expression:

$$\frac{2\pi^2}{n}\omega_0 \leq \omega_1$$

The invention described in claim 4 is a propulsive force generating method, wherein, a rotatably arranged parent body of rotation is rotationally driven at a rotational angular velocity $\omega_0$, the n (n $\geq$ 1 integer) child bodies of rotation arranged on the parent body of rotation and having rotating axes in the circumferential direction of the parent body of rotation are rotationally driven at a rotational angular velocity $\omega_1$ having the same sign as that of the rotational angular velocity $\omega_0$, and the rotational angular velocity $\omega_0$ and the rotational angular velocity $\omega_1$ have the same sign and satisfy the following numerical expression:

$$F = \frac{nI_{yy}}{2\pi^2 r}\omega_0^2 = \frac{nma^2}{4\pi^2 r}\omega_0^2$$

[Effect of the Invention]

According to the propulsive force generating device and a propulsive force generating method of the present invention, propulsive force can be efficiently obtained from rotational movement of a body of rotation.

More specifically, by using an electric motor or the like as a means for rotational driving, a parent body of rotation and a child body of rotation can be easily rotated at a high speed, and propulsive force can be easily increased. In addition, since a reactionary substance is not necessary, a mass of fuel need not be carried unlike in a rocket. For this reason, for example, as long as energy such as electric power is supplied, propulsive force is generated.

For this reason, since the propulsive force generating device can be operated as long as energy is supplied, at the same time, the propulsive force generating device can be accelerated as long as energy is supplied. This means the possibility that an object propelled by the propulsive force generating device and the propulsive force generating method according to the present invention can reach an extremely high speed (for example, the velocity of light).

Furthermore, when the device is used in the gravity field, the device operates as as a flotation device and may be applied as an antigravity device. In addition, if the propulsive force is equivalent to gravitational force, it can not be denied the possibility that the propulsive force generating device according to the present invention generates the gravity field. This means the possibility of communication using the gravity field, i.e., gravitational wave communication.

More specifically, according to the inventions described in claim 1 and claim 3, the rotatably formed parent body of rotation is rotationally driven at the rotational angular velocity $\omega_0$, the n (n $\geq$ 1 integer) child bodies of rotation arranged on the parent body of rotation and having the rotating axes in the circumferential direction of the parent body of rotation are rotationally driven at the rotational angular velocity $\omega_1$ having the same sign as that of the rotational angular velocity $\omega_0$ by the rotationally driving means which is flexibly bound, the rotational angular velocity $\omega_0$ and the rotational angular velocity $\omega_1$ have the same sign, and the rotational velocities of the parent body of rotation and the child body of rotation satisfy a predetermined condition. Thus, theoretically derived propulsive force can be obtained.

Furthermore, according the invention described in claim 2 and claim 4, when the bodies of rotation are driven on a predetermined condition when a inertia moment of the child body of rotation is given by $I_1$, a distance from the center of the parent body of rotation to the center of gravity of the child body of rotation is given by r, the mass of the child body of rotation is given by m, and the radius of the child body of rotation is given by a, propulsive force $F$ in the axial direction of the parent body of rotation can be obtained as the following theoretically driven numerical expression:

$$ F = \frac{nI_{yy}}{2\pi^2 r}\omega_0{}^2 = \frac{nma^2}{4\pi^2 r}\omega_0{}^2 $$

Brief Description of the Drawings

FIGS. 1(a) and 1(b) are diagrams showing rotation of a vector around an axis used in a theoretical consideration of a propulsive force generating device and a propulsive force generating method according to the present invention.
FIG. 2 is a diagram showing rotation of a body of rotation used in the theoretical consideration.
FIGS. 3(a) and 3(b) are diagrams used in the theoretical consideration, wherein FIG. 3(a) is a diagram showing a Hodograph and FIG. 3(b) is a diagram showing rotation of a disk having a radius $\omega_0$.
FIGS. 4(a) and 4(b) show a model of a propulsive force generating device used in the theoretical consideration, wherein FIG. 4(a) is a plan view and FIG. 4(b) is a perspective view of a child rotor.
FIG. 5 is a photograph showing a device used in a preliminary demonstration experiment of the propulsive force generating device according to the present invention.
FIG. 6 is a perspective view showing a device used in a demonstration experiment of the propulsive force generating device according to the present invention.
FIGS. 7(a) to 7(d) are diagrams showing the device used in the demonstration experiment of the propulsive force generating device according to the present invention, wherein FIG. 7(a) is a front view, FIG. 7(b) is a side view, FIG. 7(c) is a bottom view and FIG. 7(d) is a plan view.
FIGS. 8(a) and 8(b) are photographs showing a state of the demonstration experiment.
FIGS. 9(a) and 9(b) are photographs showing a state of the demonstration experiment.
FIGS. 10(a) to 10(c) are graphs showing a change in propulsive force with respect to a change in rotating speed of the child body of rotation in the demonstration experiment.
FIGS. 11(a) to 11(c) are graphs showing a change in propulsive force with respect to a change in rotating speed of the child body of rotation in the demonstration experiment.
FIGS. 12(a) to 12(c) are graphs showing a change in propulsive force with respect to a change in rotating speed of the child body of rotation in the demonstration experiment.
FIG. 13 is a graph showing a result of the demonstration experiment and a theoretical value.

[EMBODIMENT]

A propulsive force generating device and a propulsive force generating method according to an embodiment for carrying out the present invention will be described below based on a theoretical consideration and a demonstration experiment.
The propulsive force generating device and the propulsive force generating method according to the present invention are invented the following background.
A rotating object does not suddenly change in its direction. When the rotating object changes in its rotating axial direction, the change is a continuous "smooth" change, and discontinuity does not occur. What rotations and what changes are "smooth" were calculated by using quaternions (quaternion).
Therefore, with respect to a concrete device, an angular momentum conservation low was described, and Taylor expansion was performed. As a result, it was found that work was performed.
The rotating axis of the object has inertia, and naturally has the property of being fixed with respect to a space.

When the rotating axis is forcibly changed, the rotating axis may be a "foothold" with respect to a space. Rotation and a change which were given to obtain a "foothold" were diagrammatically calculated using Hodographs. A method of calculating a magnitude of power serving as an output was derived by an energy formula.

Furthermore, the need for a slipping mechanism serving as a mechanical constituent element was explained. The propulsive force generating device was actually manufactured, and an experiment was performed. When calculated conditions were given, an output result based on the calculation was obtained.

In the propulsive force generating device and the propulsive force generating method, when parallel acceleration can be obtained by rotation, a high rotating speed can be easily obtained by using a motor or the like to make it possible to easily increase an output. In addition, since no reactionary substance is necessary, a mass of fuel need not be carried as unlike in a rocket. This also influences the operable time of a " spinning top propulsion device", the device operates as long as energy is supplied.

As described above, to say that the device can be operated as long as energy can be supplied, at the same time, means that acceleration is available as long as energy can be supplied. That is, this shows the possibility of reaching the "speed of light".

When the propulsive force generating device and the propulsive force generating method are used in the gravity field, the device operates as a floatation device and may be an antigravity device. Furthermore, if the propulsive force is equivalent to the gravity, the propulsive force generating device serves as a gravity control device. The possibility that the device generates the gravity field cannot be denied, and this shows the possibility of communication using the gravity field, i.e., gravitational wave communication.

The explanation will be made along the following items.

    · Application to quaternion attitude
    · Time derivative of quaternion
    · "Smooth" change
    · Analysis of concrete device
    · Threshold coefficient
    · Calculation of output
    · Reason why child rotor needs flexible binding (slipping mechanism)
    · Verification experiment and consideration
    · Additional experiment and consideration

The propulsive force generating device and the propulsive force generating method according to the present invention will be theoretically considered. First, a method of showing a vector rotation by using quaternions (quaternion) will be described below as mathematical preparation which is the base of theoretical considerations.

<Application of quaternion attitude>

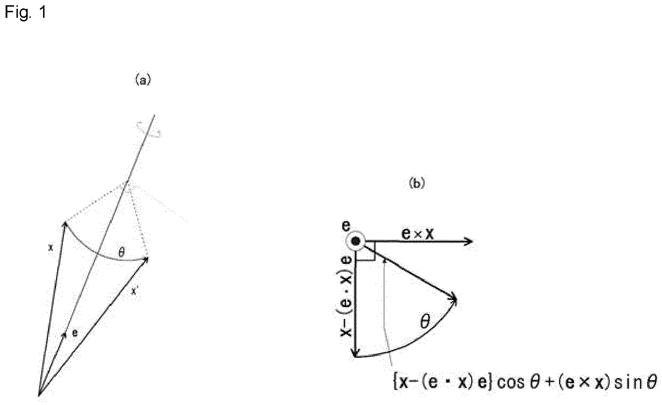

Consider the case where a certain vector x is rotated by an angle θ around an arbitrary axis e. FIGS. 1(a) and 1(b) are diagrams showing rotation of a vector around axis used in the theoretical consideration of the propulsive force generating device and the propulsive force generating method according to the present invention. As shown in FIG. 1(a), a vector obtained by rotating a unit vector in the axial direction e times is denoted by $x'$. Since the vector can be translated, as shown in FIG. 1(b), consider $x$ as having one end tangent to the rotating axis.

First, according to FIG. 1(a),

$$x' = (x \cdot e)e + \{x - (x \cdot e)e\}\cos\theta + (e \times x)\sin\theta \qquad (1.\ 1a)$$

$$= (x \cdot e)e - x + x + \{x - (x \cdot e)e\}\cos\theta + (e \times x)\sin\theta$$

$$= x + (1 - \cos\theta)\{(x \cdot e)e - x\} + (e \times x)\sin\theta$$

$$= x + (1 - \cos\theta\{(x \cdot e)e - (e \cdot e)x\}) + (e \times x)\sin\theta$$

$$= x + (1 - \cos\theta)e \times e \times x + (e \times x)\sin\theta$$

$$= \{I + \sin\theta\hat{e} + (1 - \cos\theta)\hat{e}^2\}x \qquad (1.\ 1b)$$

where, $I$ denotes a unit matrix.

$$\hat{e} = \begin{bmatrix} 0 & -e_z & e_y \\ e_z & 0 & -e_x \\ -e_y & e_x & 0 \end{bmatrix} \tag{1.2a}$$

$$\hat{e}x = e \times x \tag{1.2b}$$

Furthermore, from the double-angle and half-angle formulas,

$$x' = \left\{ I + 2\cos\frac{\theta}{2}\sin\frac{\theta}{2}\hat{e} + 2\sin\frac{\theta}{2}\hat{e} \cdot \sin\frac{\theta}{2}\hat{e} \right\} x \tag{1.3}$$

when a quaternion q representing rotation of $\theta$ around an arbitrary axis is defined as:

$$q = \left( \cos\frac{\theta}{2}, \sin\frac{\theta}{2}e \right) \tag{1.4a}$$

$$= (a, V) \tag{1.4b}$$

$$x' = \left\{ I + 2a\hat{V} + 2\hat{V}^2 \right\} x = Rx \tag{1.5}$$

is satisfied. where

$$\hat{V} = \begin{bmatrix} 0 & -V_z & V_y \\ V_z & 0 & -V_x \\ -V_y & V_x & 0 \end{bmatrix}$$

$$R = \left\{ I + 2a\hat{V} + 2\hat{V}^2 \right\} \tag{1.6}$$

In this case, if an inclination of the axis at time $t_0$ and a transformation matrix $R$ at time t are known, the direction of the axis at time t is found.

<Time Derivative of Quaternion>

Now, when basic vectors of a three-dimensional space are defined as $C_1$, $C_2$, and $C_3$, and the three vectors rotate around an axis represented by a certain angular velocity vector given by:

$$\omega = \begin{bmatrix} \omega_1 \\ \omega_2 \\ \omega_3 \end{bmatrix} \tag{2.1}$$

$$\omega = \omega_1 c_1 + \omega_2 c_2 + \omega_3 c_3 \tag{2.2}$$

the time derivatives of $C_1$, $C_2$, and $C_3$ satisfy the following relationship:

$$\begin{cases} \dot{c}_1 = \omega \times c_1 \\ \dot{c}_2 = \omega \times c_2 \\ \dot{c}_2 = \omega \times c_3 \end{cases} \tag{2.3}$$

When Equations (2.3) are combined into a single equation in matrix representation, by using $\varpi$ given by the following equation:

$$\hat{\omega} = \begin{bmatrix} 0 & -\omega_3 & \omega_2 \\ \omega_3 & 0 & -\omega_1 \\ -\omega_2 & \omega_1 & 0 \end{bmatrix} \tag{2.4}$$

$$\dot{c} = \hat{\omega}c \tag{2.5}$$

is satisfied, where

$$c = \begin{bmatrix} c_1 & c_2 & c_3 \end{bmatrix} \tag{2.6}$$

$$\hat{\omega}c = \begin{bmatrix} \omega \times c_1 & \omega \times c_2 & \omega \times c_3 \end{bmatrix} \tag{2.7}$$

A similar argument can be applied to the transformation matrix $R$. More specifically, if the elements of the transformation matrix $R(t)$ at certain time are separated by one column and each of them is regarded as a basic vector, using the angular velocity vector $\varpi$ $(t)$ at that time, the following equation (notation of $(t)$ will be omitted hereinafter) is satisfied.

$$\dot{R} = \hat{\omega}R \tag{2.8}$$

In Equation (2.8), since the vectors created by separating the matrix R column by column are all unit vectors which are orthogonal to each other, the vectors can be expressed by the following:

$$R = \begin{bmatrix} l & m & n \end{bmatrix} \tag{2.9}$$

where $l$, $m$, and $n$ denote unit vectors orthogonal to each other.
Thus, the product of the transpose matrices $R^T$ and R of $R$ is a unit matrix as follows:

$$R^T R = \begin{bmatrix} l^T \\ m^T \\ n^T \end{bmatrix} \begin{bmatrix} l & m & n \end{bmatrix} = \begin{bmatrix} l \cdot l & l \cdot m & l \cdot n \\ m \cdot l & m \cdot m & m \cdot n \\ n \cdot l & n \cdot m & n \cdot n \end{bmatrix} = I \tag{2.10}$$

Therefore,

$$R^{-1} = R^T \tag{2.11}$$

When Equation (2.11) is substituted into Equation (2.8),

$$\dot{R}R^T = \hat{\omega} \tag{2.12}$$

7

and both the sides of Equation (1.6) are time-differentiated, the following equation is obtained:

$$\dot{R} = 2\dot{a}\tilde{V} + 2a\dot{\tilde{V}} + 2\dot{\tilde{V}}\tilde{V} + 2\tilde{V}\dot{\tilde{V}} \qquad (2.13)$$

When Equation (1.6) and Equation (2.13) are substituted into Equation (2.12), the following equation is obtained:

$$\dot{R}R^T = \left\{ 2\dot{a}\tilde{V} + 2a\dot{\tilde{V}} + 2\dot{\tilde{V}}\tilde{V} + 2\tilde{V}\dot{\tilde{V}} \right\}\left\{ I - 2a\tilde{V} + 2\tilde{V}^2 \right\}$$

$$= 2\dot{a}\tilde{V} + 2a\dot{\tilde{V}} + 2\dot{\tilde{V}}\tilde{V} + 2\tilde{V}\dot{\tilde{V}} - 4a\dot{a}\tilde{V}^2 - 4a^2\dot{\tilde{V}}\tilde{V} - 4a\dot{\tilde{V}}\tilde{V}\tilde{V} - 4a\dot{\tilde{V}}\tilde{V}^2$$

$$+4\dot{a}\tilde{V}^3 + 4a\dot{\tilde{V}}\tilde{V}^2 + 4\dot{\tilde{V}}\tilde{V}\tilde{V} + 4\tilde{V}\dot{\tilde{V}}\tilde{V}^3 \qquad (2.14)$$

Where

$$\tilde{V}\dot{\tilde{V}} = \dot{V}V^T - (V \cdot \dot{V})I \qquad (2.15)$$

According to

$$\dot{\tilde{V}}\tilde{V} = VV^T - (V \cdot \dot{V})I \qquad (2.16)$$

the following equations are satisfied:

$$\tilde{V}\dot{\tilde{V}}\tilde{V} = \tilde{V}V\dot{V}^T - (V \cdot \dot{V})\tilde{V} = -(V \cdot \dot{V})\tilde{V} \qquad (2.17)$$

$$\tilde{V}\dot{\tilde{V}}\tilde{V}^2 = -(V \cdot \dot{V})\tilde{V}^2 \qquad (2.18)$$

Furthermore, the following equation is satisfied:

$$\tilde{V}^3 = -V^2\tilde{V} \qquad (2.19)$$

In addition, the following equation is satisfied:

$$a\dot{a} + V \cdot \dot{V} = \cos\theta \cdot (-\sin\theta) + \cos\theta \cdot \sin\theta = 0 \qquad (2.20)$$

When Equations (2.15) to (2.20) are applied, Equation (2.14) is expressed as follows:

$$\dot{R}R^T = \{2\dot{a}\hat{V} + 2a\dot{\hat{V}} + 2\hat{V}\dot{\hat{V}} + 2\dot{\hat{V}}\hat{V}\}\{I - 2a\hat{V} + 2\hat{V}^2\}$$

$$= 2\dot{a}\hat{V} + 2a\dot{\hat{V}} + 2\hat{V}\dot{\hat{V}} + 2\dot{\hat{V}}\hat{V} - 4a\dot{a}\hat{V}^2 - 4a^2\dot{\hat{V}}\hat{V} - 4a\hat{V}\dot{\hat{V}}\hat{V} - 4a\dot{\hat{V}}\hat{V}^2$$
$$+ 4\dot{a}\hat{V}^3 + 4a\hat{V}\dot{\hat{V}}\hat{V}^2 + 4\hat{V}\dot{\hat{V}}\hat{V} + 4\dot{\hat{V}}\hat{V}^3$$

$$= 2\dot{a}\hat{V} + 2a\dot{\hat{V}} + 2\hat{V}\dot{\hat{V}} + 2\dot{\hat{V}}\hat{V} - 4a\dot{a}\hat{V}^2 - 4a^2\dot{\hat{V}}\hat{V} - 4a\hat{V}\dot{\hat{V}}\hat{V} + 4\dot{a}\hat{V}^3 + 4\hat{V}\dot{\hat{V}}\hat{V} - 4V^2\dot{\hat{V}}\hat{V}$$

$$= 2\dot{a}\hat{V} + 2a\dot{\hat{V}} + 2\hat{V}\dot{\hat{V}} + 2\dot{\hat{V}}\hat{V} - 4a\dot{a}\hat{V}^2 - 4a^2\dot{\hat{V}}\hat{V} + 4a(V \cdot \dot{V})\hat{V} + 4\dot{a}\hat{V}^3 - 4(V \cdot \dot{V})\hat{V}^2 - 4V^2\dot{\hat{V}}\hat{V}$$

$$= 2\dot{a}\hat{V} + 2a\dot{\hat{V}} + 2\hat{V}\dot{\hat{V}} + 2\dot{\hat{V}}\hat{V} + 4a(V \cdot \dot{V})\hat{V} - 4\dot{\hat{V}}\hat{V} - 4\dot{a}V^2\hat{V}$$

$$= 2\dot{a}\hat{V} + 2a\dot{\hat{V}} + 2\hat{V}\dot{\hat{V}} - 2\dot{\hat{V}}\hat{V} + 4aV\dot{V}\hat{V} - 4\dot{a}V^2\hat{V}$$

$$= 2\dot{a}\hat{V} + 2a\dot{\hat{V}} + 2\hat{V}\dot{\hat{V}} - 2\dot{\hat{V}}\hat{V} - 4\dot{V}\hat{V}$$

$$= -2\dot{a}\hat{V} + 2a\dot{\hat{V}} + 2\hat{V}\dot{\hat{V}} - 2\dot{\hat{V}}\hat{V}$$

where, when

$$\hat{V}\dot{\hat{V}} - \hat{V}\dot{\hat{V}} = \hat{V}\hat{V}^T - \dot{\hat{V}}\hat{V}^T = -(\widehat{\dot{V} \times V}) \qquad (2.21)$$

is used,

$$R^T\dot{R} = -2\dot{a}\hat{V} + 2a\dot{\hat{V}} + 2\widehat{\dot{V} \times V} = \hat{\omega} \qquad (2.22)$$

is satisfied. Thus,

$$\therefore \quad \omega = -\dot{a}V + 2a\dot{V} + 2\dot{V} \times V \qquad (2.23)$$

As follows, the first-order differential equation for a and *V* from the inner and outer products with V on the basis of ω calculated in Equation (2.23).
the inner product between ω and *V* is given by the following equation:

$$V^T \cdot \omega = V^T(-2\dot{a}V + 2a\dot{V} + 2\dot{V} \times V)$$
$$= -2\dot{a}(V^2) + 2a(V \cdot \dot{V}) \qquad (2.24)$$

From Equation (2.20), the following equations are satisfied:

$$V^T \cdot \omega = -2\dot{a}(1 - a^2) - 2a(a\dot{a})$$
$$= -2\dot{a} \qquad (2.25)$$

$$\therefore \quad \dot{a} = -\frac{1}{2}V^T \cdot \omega = -\frac{1}{2}\omega^T \cdot V \qquad (2.26)$$

Next, the outer product of $\omega$ and $V$ is calculated.

$$
\begin{aligned}
\omega \times V &= \left(-2\dot{a}V + 2a\dot{V} + 2\dot{V} \times V\right) \times V \\
&= 2a\dot{V} \times V + 2\left(\dot{V} \times V\right) \times V \\
&= 2a\dot{V} \times V + 2\left(\dot{V} \cdot V\right)V - 2V^2\dot{V}
\end{aligned}
$$

From Equation (2.20), the following equation is satisfied:

$$
\begin{aligned}
&= 2a\dot{V} \times V - 2a\dot{a}V - 2V^2\dot{V} \\
&= a\left(\omega + 2\dot{a}V - 2a\dot{V}\right) - 2a\dot{a}V - 2V^2\dot{V} \\
&= a\omega - 2a^2\dot{V} - 2V^2\dot{V} \\
&= a\omega - 2\dot{V} \tag{2.27}
\end{aligned}
$$

$$
\therefore \quad \dot{V} = \frac{1}{2}\left(a\omega - \omega \times V\right) \tag{2.28}
$$

As described above, Equation (2.26) and Equation (2.28) can be expressed in matrix notation as follows:

$$
\begin{aligned}
\begin{bmatrix} \dot{V} \\ \dot{a} \end{bmatrix} &= \frac{1}{2}\begin{bmatrix} -\tilde{\omega} & \omega \\ -\omega^T & 0 \end{bmatrix}\begin{bmatrix} V \\ a \end{bmatrix} \\
&= \frac{1}{2}\begin{bmatrix} 0 & \omega_z & -\omega_y & \omega_x \\ -\omega_z & 0 & \omega_x & \omega_y \\ \omega_y & -\omega_x & 0 & \omega_z \\ -\omega_x & -\omega_y & -\omega_z & 0 \end{bmatrix}\begin{bmatrix} V \\ a \end{bmatrix} \tag{2.29}
\end{aligned}
$$

or can be summarized into the following form:

$$
\begin{bmatrix} \dot{a} \\ \dot{V} \end{bmatrix} = \frac{1}{2}\begin{bmatrix} 0 & -\omega^T \\ \omega & -\tilde{\omega} \end{bmatrix}\begin{bmatrix} a \\ V \end{bmatrix} \tag{2.30}
$$

The a and $V$ are calculated from the first-order differential equation to make it possible to obtain a time history of the transformation matrix R.

<"Smooth" Change>

Rotation at an angular acceleration $\omega_0$ is given to the angular velocity $\omega$ at which the vector is rotated. In this case, an angular acceleration which can be given is calculated without changing the magnitude of $\omega$ which is an original angular velocity.

The time propagation formula of quaternions is expressed as follows:

$$
\dot{q} = \frac{1}{2}\Omega q \tag{3.1}
$$

where

$$
\Omega = \begin{bmatrix} 0 & -\omega^T \\ \omega & -\tilde{\omega} \end{bmatrix} \tag{3.2}
$$

is satisfied.
In this case, when both the sides of Equation (3.1) are differentiated.

$$\ddot{q} = \frac{1}{2}\dot{\Omega}q + \frac{1}{2}\Omega\dot{q} \qquad (3.3)$$

is satisfied. When Equation (3.1) is substituted into Equation (3.3),

$$= \frac{1}{2}\dot{\Omega}q + \frac{1}{4}\Omega^2 q \qquad (3.4)$$

Therefore, the following relationship is satisfied.

$$\ddot{q} = \frac{1}{2}\dot{\Omega}q + \frac{1}{4}\Omega^2 q \qquad (3.5)$$

When this equation is transformed, the following equation is obtained:

$$\frac{1}{2}\dot{\Omega}q = \ddot{q} - \frac{1}{4}\Omega^2 q \qquad (3.6)$$

Thus, the following equation is satisfied:

$$\dot{\Omega}q = 2\ddot{q} - \frac{1}{2}\Omega^2 q \qquad (3.7)$$

When a matrix formed by quaternions $q$ is assumed and expressed as a matrix $Q$, Equation (3.7) is expressed as follows:

$$\dot{\Omega}Q = 2\ddot{Q} - \frac{1}{2}\Omega^2 Q \qquad (3.8)$$

Therefore, the following equation is expressed:

$$\dot{\Omega} = 2\ddot{Q}Q^{-1} - \frac{1}{2}\Omega^2 \qquad (3.9)$$

The quaternions $q$ representing $\theta$ rotation is expressed by the following equation:

$$q = \begin{pmatrix} \cos\frac{\theta}{2} \\ \sin\frac{\theta}{2}e \end{pmatrix} \qquad (3.10)$$

In contrast to this, e expressed by the following equation is given:

$$e = e_0 + \omega_0 t = e_0 + \omega_0 \dot{e}t \qquad (3.11)$$

where

$$\begin{cases} \dot{\omega}_0 = 0 \\ \ddot{\omega}_0 = 0 \end{cases}$$

In this case, when both the sides are differentiated,

$$\dot{q} = \begin{pmatrix} -\frac{1}{2}\sin\frac{\theta}{2} + \omega_0\cos\frac{\theta}{2} \\ \frac{1}{2}\cos\frac{\theta}{2}e + \sin\frac{\theta}{2}\omega_0 \end{pmatrix} \qquad (3.12)$$

is satisfied.

When both the sides are differentiated furthermore, the following equation is obtained:

$$\ddot{q} = \begin{pmatrix} -\frac{1}{4}\cos\frac{\theta}{2} - \frac{1}{2}\sin\frac{\theta}{2}\omega_0 - \frac{1}{2}\sin\frac{\theta}{2}\omega_0 \\ -\frac{1}{4}\sin\frac{\theta}{2}e + \frac{1}{2}\cos\frac{\theta}{2}\omega_0 + \frac{1}{2}\cos\frac{\theta}{2}\omega_0 \end{pmatrix}$$

$$= -\frac{1}{4}\begin{pmatrix} \cos\frac{\theta}{2} \\ \sin\frac{\theta}{2}e \end{pmatrix} + \begin{pmatrix} -\sin\frac{\theta}{2}\omega_0 \\ \cos\frac{\theta}{2}\omega_0 \end{pmatrix} = -\frac{1}{4}\begin{pmatrix} \cos\frac{\theta}{2} \\ \sin\frac{\theta}{2}e \end{pmatrix} +$$

$$\omega_0\begin{pmatrix} -\sin\frac{\theta}{2} \\ \cos\frac{\theta}{2}\dot{e} \end{pmatrix} \qquad (3.13)$$

The first term of the right side represents the original quaternions itself. When the second term is denoted by r, the first term is expressed as follows:

$$\ddot{q} = -\frac{1}{4}q + \omega_0 r \qquad (3.14)$$

In this case, a matrix formed by quaternary vectors is denoted by [] and a matrix formed by *r* is denoted by *R,* the following equation can be obtained:

$$\ddot{Q} = \left[-\frac{1}{4}q + \omega_0 r\right] = \left(-\frac{1}{4}Q + \omega_0 R\right) \qquad (3.15)$$

When this is substituted into Equation (3.9), the following equation is obtained:

$$\dot{\Omega} = 2\ddot{Q}Q^{-1} - \frac{1}{2}\Omega^2$$

$$= 2\left[-\frac{1}{4}q + \omega_0 r\right]Q^{-1} - \frac{1}{2}\Omega^2$$

$$= \left(-\frac{1}{2}Q + 2\omega_0 R\right)Q^{-1} - \frac{1}{2}\Omega^2$$

$$= -\frac{1}{2}(I - \Omega^2) + 2\omega_0 RQ^{-1} \qquad (3.16)$$

In this case, since S2 is obtained as follows:

$$\Omega = \begin{bmatrix} 0 & -\omega_x & -\omega_y & -\omega_z \\ \omega_x & 0 & \omega_z & -\omega_y \\ \omega_y & -\omega_z & 0 & \omega_x \\ \omega_z & \omega_y & -\omega_x & 0 \end{bmatrix} \tag{3.17}$$

the following equation is satisfied:

$$\Omega^2 = \begin{bmatrix} 0 & -\omega_x & -\omega_y & -\omega_z \\ \omega_x & 0 & \omega_z & -\omega_y \\ \omega_y & -\omega_z & 0 & \omega_x \\ \omega_z & \omega_y & -\omega_x & 0 \end{bmatrix} \begin{bmatrix} 0 & -\omega_x & -\omega_y & -\omega_z \\ \omega_x & 0 & \omega_z & -\omega_y \\ \omega_y & -\omega_z & 0 & \omega_x \\ \omega_z & \omega_y & -\omega_x & 0 \end{bmatrix}$$

$$= \begin{bmatrix} -\omega & 0 & 0 & 0 \\ 0 & -\omega & 0 & 0 \\ 0 & 0 & -\omega & 0 \\ 0 & 0 & 0 & -\omega \end{bmatrix}$$

$$= -\omega I \tag{3.18}$$

Therefore, S2 is expressed as follows:

$$\dot{\Omega} = -\frac{1}{2}(I - \Omega^2) + 2\omega_0 RQ^{-1}$$
$$= -\frac{1}{2}(I + \omega I) + 2\omega_0 RQ^{-1}$$
$$= -\frac{1}{2}(1 + \omega)I + 2\omega_0 RQ^{-1} \tag{3.19}$$

Now, since $Rq^{-1}$ is given as follows:

$$r = \begin{pmatrix} -\sin\frac{\theta}{2} \\ \cos\frac{\theta}{2}\acute{e} \end{pmatrix} \tag{3.20}$$

$$q^{-1} = \begin{pmatrix} \cos\frac{\theta}{2} \\ -\sin\frac{\theta}{2}e \end{pmatrix} \tag{3.21}$$

when appropriate imaginary units $i_1, j_1, k_1, i_2, j_2,$ and $k_2$ are given, r and q$^{-1}$ are expressed as follows:

$$r = -\sin\frac{\theta}{2} + \cos\frac{\theta}{2}i_1 + \cos\frac{\theta}{2}j_1 + \cos\frac{\theta}{2}k_1 \tag{3.22}$$

$$q^{-1} = \cos\frac{\theta}{2} - \sin\frac{\theta}{2}i_2 - \sin\frac{\theta}{2}j_2 - \sin\frac{\theta}{2}k_2 \tag{3.23}$$

and the product thereof is obtained as follows

$$rq^{-1} = \left(-\sin\frac{\theta}{2} + \cos\frac{\theta}{2}i_1 + \cos\frac{\theta}{2}j_1 + \cos\frac{\theta}{2}k_1\right)$$

$$\left(\cos\frac{\theta}{2} - \sin\frac{\theta}{2}i_2 - \sin\frac{\theta}{2}j_2 - \sin\frac{\theta}{2}k_2\right) =$$

$$-\sin\frac{\theta}{2}\cos\frac{\theta}{2} + \sin^2\frac{\theta}{2}i_2 + \sin^2\frac{\theta}{2}j_2 + \sin^2\frac{\theta}{2}k_2$$

$$+\cos^2\frac{\theta}{2}i_1 - \sin\frac{\theta}{2}\cos\frac{\theta}{2}i_1i_2 - \sin\frac{\theta}{2}\cos\frac{\theta}{2}i_1j_2 - \sin\frac{\theta}{2}\cos\frac{\theta}{2}i_1k_2$$

$$+\cos^2\frac{\theta}{2}j_1 - \sin\frac{\theta}{2}\cos\frac{\theta}{2}j_1i_2 - \sin\frac{\theta}{2}\cos\frac{\theta}{2}j_1j_2 - \sin\frac{\theta}{2}\cos\frac{\theta}{2}j_1k_2$$

$$+\cos^2\frac{\theta}{2}k_1 - \sin\frac{\theta}{2}\cos\frac{\theta}{2}k_1i_2 - \sin\frac{\theta}{2}\cos\frac{\theta}{2}k_1j_2 - \sin\frac{\theta}{2}\cos\frac{\theta}{2}k_1k_2 \qquad (3.24)$$

When this is expressed in a matrix notation, the following equation is obtained:

$$RQ^{-1} = \begin{bmatrix} -\sin\frac{\theta}{2}\cos\frac{\theta}{2} & \sin^2\frac{\theta}{2} & \sin^2\frac{\theta}{2} \\ \cos^2\frac{\theta}{2} & \ddots & \sin^2\frac{\theta}{2} \\ \cos^2\frac{\theta}{2} & & -\sin\frac{\theta}{2}\cos\frac{\theta}{2} \\ \cos^2\frac{\theta}{2} & & \ddots \end{bmatrix} \qquad (3.25)$$

In this case, since

$$\dot{\Omega} = -\frac{1}{2}(1+\omega)I + 2\omega_0 RQ^{-1} \qquad (3.26)$$

is satisfied, the elements are compared with each other. More specifically, the elements of the following equation are compared with each other:

$$\begin{bmatrix} 0 & -\dot{\omega}_x & -\dot{\omega}_y & -\dot{\omega}_z \\ \dot{\omega}_x & 0 & \dot{\omega}_z & \dot{\omega}_y \\ \dot{\omega}_y & -\dot{\omega}_z & 0 & \dot{\omega}_x \\ \dot{\omega}_z & \dot{\omega}_y & -\dot{\omega}_x & 0 \end{bmatrix} = -\frac{1}{2}(1+\omega)\begin{bmatrix} 1 & 0 & 0 & 0 \\ 0 & 1 & 0 & 0 \\ 0 & 0 & 1 & 0 \\ 0 & 0 & 0 & 1 \end{bmatrix} + 2\omega_0 \begin{bmatrix} -\sin\frac{\theta}{2}\cos\frac{\theta}{2} & : & \sin^2\frac{\theta}{2} \\ \cdots & \cdot & \cdots \\ \cos^2\frac{\theta}{2} & : & -\sin\frac{\theta}{2}\cos\frac{\theta}{2} \end{bmatrix}$$

$$\qquad (3.27)$$

More specifically, the following relationships hold:

$$-\frac{1}{2}(1+\omega) - 2\omega_0 \sin\frac{\theta}{2}\cos\frac{\theta}{2} = 0 \qquad (3.27.1)$$

$$\begin{cases} -\frac{1}{2}(1+\omega) - 2\omega_0 \sin\frac{\theta}{2}\cos\frac{\theta}{2}i_1 i_2 \\ = -\frac{1}{2}(1+\omega) - 2\omega_0 \sin\frac{\theta}{2}\cos\frac{\theta}{2}j_1 j_2 \\ = -\frac{1}{1}(1+\omega) - 2\omega_0 \sin\frac{\theta}{2}\cos\frac{\theta}{2}k_1 k_2 \end{cases} \qquad (3.27.2)$$

$$\begin{cases} \dot{\omega}_x = -2\omega_0 \sin^2\frac{\theta}{2}i_2 = 2\omega_0\cos^2\frac{\theta}{2}i_1 \\ \dot{\omega}_y = -2\omega_0 \sin^2\frac{\theta}{2}j_2 = 2\omega_0\cos^2\frac{\theta}{2}j_1 \\ \dot{\omega}_z = -2\omega_0 \sin^2\frac{\theta}{2}k_2 = 2\omega_0\cos^2\frac{\theta}{2}k_1 \end{cases} \qquad (3.27.3)$$

Here, since Equations (3.27.3), the following equations are satisfied:

$$\begin{cases} i_2 = -\frac{\cos^2\frac{\theta}{2}}{\sin^2\frac{\theta}{2}}i_1 \\ j_2 = -\frac{\cos^2\frac{\theta}{2}}{\sin^2\frac{\theta}{2}}j_1 \\ k_2 = -\frac{\cos^2\frac{\theta}{2}}{\sin^2\frac{\theta}{2}}k_1 \end{cases} \qquad (3.27.3.1)$$

the following is obtained:

$$i_1 \parallel i_2 \quad j_1 \parallel j_2 \quad k_1 \parallel k_2$$

More specifically, this shows that both the rotations are inertial systems and are not dynamic coordinate systems.
In addition, since Equation (3.27.3.1), the following equation is satisfied:

$$i_1 \cdot i_2 = i_1 \cdot \left(-\frac{\cos^2\frac{\theta}{2}}{\sin^2\frac{\theta}{2}}\right)i_1$$

$$= \frac{\cos^2\frac{\theta}{2}}{\sin^2\frac{\theta}{2}} \qquad (3.27.3.2)$$

When Equation (3.27.3.2) is substituted into Equation (3.27.2), the following equation is satisfied,

$$-\frac{1}{2}(1+\omega) + 2\omega_0 \sin\frac{\theta}{2}\cos\frac{\theta}{2}\frac{\cos^2\frac{\theta}{2}}{\sin^2\frac{\theta}{2}} = 0$$

Thus, the following equation is satisfied:

$$-\frac{1}{2}(1+\omega) + 2\omega_0 \frac{\cos^2\frac{\theta}{2}}{\sin\frac{\theta}{2}} = 0 \qquad (3.27.2.2)$$

In this case, Equation (3.27.1) and Equation (3.27.2.2) are combined to each other as follows:

$$\begin{cases} -\frac{1}{2}(1+\omega) + 2\omega_0 \sin\frac{\theta}{2}\cos\frac{\theta}{2} = 0 \\ -\frac{1}{2}(1+\omega) + 2\omega_0 \frac{\cos^3\frac{\theta}{2}}{\sin\frac{\theta}{2}} = 0 \end{cases} \qquad (3.28)$$

Since Equation (3.27.1) and Equation (3.27.2.2), the following equation is satisfied:

$$2\omega_0\left(\sin\frac{\theta}{2}\cos\frac{\theta}{2} - \frac{\cos^3\frac{\theta}{2}}{\sin\frac{\theta}{2}}\right) = 0 \qquad (3.29.1)$$

Thus, the following equations are satisfied:

$$2\omega_0\cos\frac{\theta}{2}\left(\sin\frac{\theta}{2} - \frac{\cos^2\frac{\theta}{2}}{\sin\frac{\theta}{2}}\right) = 0 \qquad (3.29.2)$$

$$2\omega_0\frac{\cos\frac{\theta}{2}}{\sin\frac{\theta}{2}}\left(\sin^2\frac{\theta}{2} - \cos^2\frac{\theta}{2}\right) = 0 \qquad (3.29.3)$$

In this case, since the following equation is satisfied:

$$\omega_0 \neq 0, \cos\frac{\theta}{2} \neq 0, \sin\frac{\theta}{2} \neq 0,$$

the following equations are satisfied:

$$\sin^2\frac{\theta}{2} - \cos^2\frac{\theta}{2} = 0 \qquad (3.29.4)$$

Thus, the following equations are satisfied:

$$\left(\sin\frac{\theta}{2} + \cos\frac{\theta}{2}\right)\left(\sin\frac{\theta}{2} - \cos\frac{\theta}{2}\right) = 0 \qquad (3.29.5)$$

$$\sin\frac{\theta}{2} = \pm\cos\frac{\theta}{2} \qquad (3.29.6)$$

Therefore, θ which is a solution is given as follows:

$$\theta = \frac{\pi}{2} \qquad (3.30)$$

When this is substituted into Equation (3.28), the following relationships hold:

$$-\frac{1}{2}(1+\omega) + 2\omega_0\frac{\sqrt{2}}{2}\frac{\sqrt{2}}{2} = 0 \qquad (3.31.1)$$

$$\omega = 2\omega_0 - 1 \qquad (3.32.1)$$

or

$$\omega_0 = \frac{\omega + 1}{2} \qquad\qquad (3.32.2)$$

$$\omega_0 = \begin{pmatrix} 0 \\ 0 \\ \omega_0 \end{pmatrix}$$

More specifically, this shows that, when the ratio is kept, the equation is satisfied. When $\quad$ , then since

$$\vartheta = \frac{\pi}{2}$$

,

$$\omega_0 \cdot \omega = 0 \qquad\qquad (3.33)$$

$$\omega = \begin{pmatrix} \omega_x \\ \omega_y \\ \omega_z \end{pmatrix}$$

is satisfied. It is found that, when $\quad$ ,

$$\omega_x \cdot 0 + \omega_y \cdot 0 + \omega_z \cdot \omega_0 = 0 \qquad\qquad (3.34)$$

is satisfied.

Therefore, the following equation is satisfied:

$$\omega_z = 0 \qquad\qquad (3.35)$$

Furthermore, it is known that $\omega_x$ and $\omega_y$ are arbitrary in magnitude. Thus, it is found that that $\omega$ is a vector in the x-y plane. In addition, although the magnitude is in (3.32), this is from the point of view of the inertial system.

Therefore, when being viewed from a rotating dynamic coordinate system at $\omega_0$, this shows that the following equation is satisfied:

$$\omega = 2\omega_0 \qquad\qquad (3.36)$$

This means that the "smooth" angular acceleration that can rotate without changing the magnitude of the original angular velocity is always of the same sign for a given angular velocity.

At the same time, this indicates that the angular acceleration in this state is 2 $\omega_0$.

<Analysis of Concrete Device>

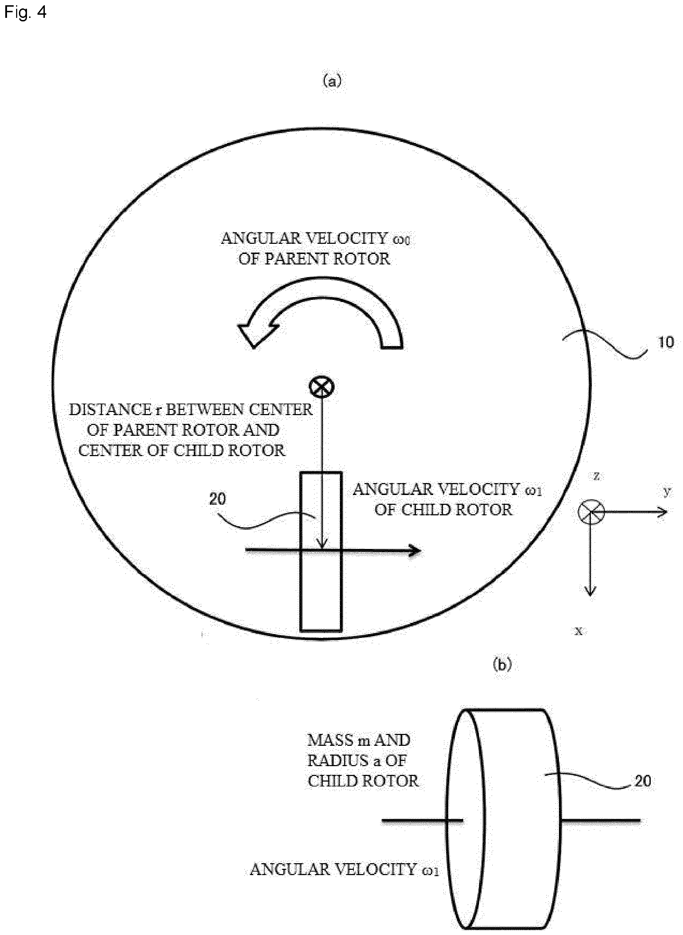

Furthermore, a concrete device will be considered. FIGS. 4(a) and 4(b) shows a model of a propulsive force generating device used in the theoretical consideration, wherein FIG. 4(a) is a plan view and FIG. 4(b) is a perspective view of a child rotor. Although only a plurality of child rotors 20 can be arranged, the child rotors are omitted in FIGS. 4(a) and 4(b). The coordinate system is oriented as shown in the figures, and the origin is set as the center of rotation of the parent rotor.

The angular momentum L of one child rotor is now expressed as follows:

17

$$L_{(\omega)} = I\omega = \begin{pmatrix} I_{xx} \\ I_{yy} \\ I_{zz} \end{pmatrix} \cdot \begin{pmatrix} \omega_x \\ \omega_y \\ \omega_z \end{pmatrix} \qquad (4.1)$$

If rotation is performed as shown in FIG. 4(b), the following equation is satisfied:

$$L_{(\omega)} = \begin{pmatrix} I_{xx} \\ I_{yy} \\ I_{zz} \end{pmatrix} \cdot \begin{pmatrix} 0 \\ \omega_1 \\ \omega_0 \end{pmatrix} \qquad (4.2)$$

When the following change is given to the resultant value,

$$\Delta\omega = \begin{pmatrix} 0 \\ 0 \\ \Delta\omega \end{pmatrix} \qquad (4.3)$$

the angular momentum becomes $L_{(\omega + \Delta\omega)}$.
This is solved by Taylor expansion, the following equation is satisfied:

$$L_{(\omega + \Delta\omega)} = L_{(\omega)} + \frac{1}{\pi}\dot{L}_{(\omega)} \cdot \Delta\omega + \frac{1}{\pi^2}\frac{\ddot{L}_{(\omega)}}{2!}\Delta\omega^2 + \cdots$$

However, since the derivative of the moment of inertia is zero, the angular momentum is given as follows:

$$= I \cdot \omega + \frac{1}{\pi}I \cdot \omega \times \Delta\omega + \frac{1}{\pi^2}\frac{1}{2!}I \cdot \ddot{\omega} \times \Delta\omega^2 + \cdots$$

Since

$$\Delta\omega^2 = \Delta\omega^2 \times \Delta\omega^2 = 0$$

is satisfied, the third term and above in the above equation is zero.
Therefore, the angular momentum is expressed as follows:

$$L_{(\omega+\Delta\omega)} = I \cdot \omega + \frac{1}{\pi} I \cdot \omega \times \dot{\Delta\omega}$$

$$= \begin{pmatrix} I_{xx} \\ I_{yy} \\ I_{zz} \end{pmatrix} \cdot \begin{pmatrix} 0 \\ \omega_1 \\ \omega_0 \end{pmatrix} + \frac{1}{\pi} \begin{pmatrix} I_{xx} \\ I_{yy} \\ I_{zz} \end{pmatrix} \cdot \begin{pmatrix} 0 \\ \omega_0 \\ 0 \end{pmatrix} \times \begin{pmatrix} 0 \\ 0 \\ \Delta\omega \end{pmatrix}$$

$$= L_{(\omega)} + \frac{1}{\pi} \begin{pmatrix} I_{xx} \\ I_{yy} \\ I_{zz} \end{pmatrix} \cdot \begin{pmatrix} \omega_0 \Delta\omega \\ 0 \\ 0 \end{pmatrix}$$

When both the sides are differentiated by time, the following equation is satisfied:

$$\frac{dL_{(\omega)}}{dt} = M$$

Furthermore, the following equation is satisfied:

$$\frac{d}{dt}\frac{1}{\pi}\left\{ \begin{pmatrix} I_{xx} \\ I_{yy} \\ I_{zz} \end{pmatrix}\begin{pmatrix} \omega_0\Delta\omega \\ 0 \\ 0 \end{pmatrix} \right\} = \frac{d}{dt}I\frac{1}{\pi}\begin{pmatrix} \omega_0\Delta\omega \\ 0 \\ 0 \end{pmatrix} = I\frac{1}{\pi}\begin{pmatrix} 0 \\ \omega_0{}^2 \\ 0 \end{pmatrix}$$

where

$$\frac{d}{dt}\begin{pmatrix} \Delta\omega \\ 0 \\ 0 \end{pmatrix} = \begin{pmatrix} 0 \\ \omega_0 \\ 0 \end{pmatrix}$$

In addition, the left side can also be written as follows:

$$\frac{d}{dt}L_{(\omega+\Delta\omega)} = M + T$$

In this case, T denotes a torque giving $\Delta\omega$ to the entire device. In this device, when the mass of the parent rotor is regarded as 0, in consideration of the presence of the n child rotors, the following equation is satisfied:

$$T_n = nr^2 m\Delta\omega$$

As described above, in this device, the following formula is satisfied:

$$\frac{d}{dt} L_{(\omega)} = M + T_n - \frac{n}{\pi} I \begin{pmatrix} 0 \\ \omega_0{}^2 \\ 0 \end{pmatrix}$$

That is, this means that, in rotation, the device performs work indicated by the following expression:

$$-\frac{n}{\pi} I \begin{pmatrix} 0 \\ \omega_0{}^2 \\ 0 \end{pmatrix}.$$

<Threshold Coefficient>

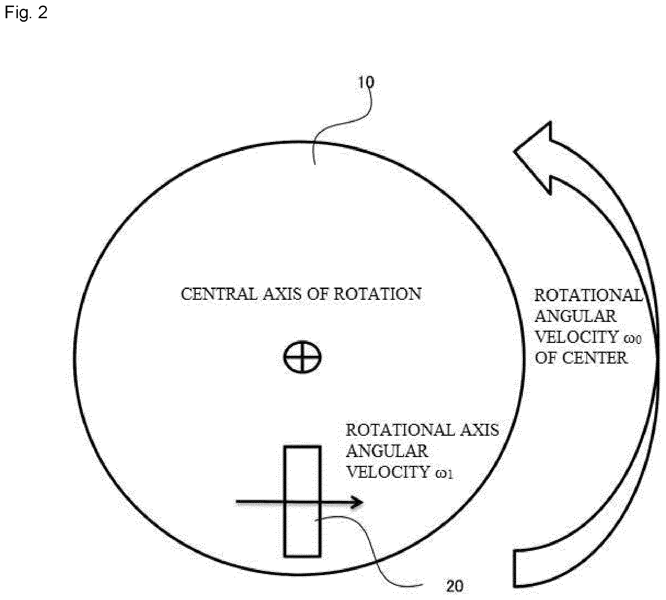

According to the consideration in the <"Smooth" Change> described above, consider the device shown in FIG. 2. In such a device, rotation of the center always gives a change to the angular velocity of the rotating axis of a child rotor 20. Consider the case of forcibly rotating the child rotor. Here, the center of rotation is defined as a parent rotor 10, and the rotating axis is defined as the child rotor 20.

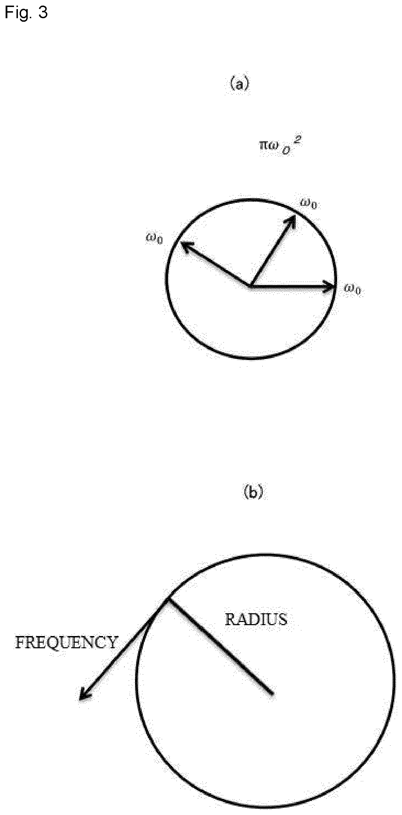

When bodies of rotation are arranged and given with an angular velocity, consider frequencies for the rotations, respectively. The total amount of angular acceleration that the center rotational angular velocity gives to the child rotor 20 in one rotation is the area $(\pi\omega_0{}^2)$ of the circle whose radius is the center rotational angular velocity, and shown in FIG. 3(a). FIG. 3(a) shows that the area of the circle is the starting points of the angular accelerations for the angular velocities which are collected at a single point.

On the other hand, a total amount of angular velocities drawn by the child rotors 20, if the number of child rotors 20 is n, the following equation is satisfied:

$$n f_1 \omega_0 = n\omega_0 \frac{\omega_1}{2\pi} = n\frac{\omega_0 \omega_1}{\pi} \tag{5.1}$$

Here, when an amount of change drawn by the child rotor 20 is below a change in amount given by the center rotational angular velocity, the angular velocity of the child rotor 20 changes.

Thus, the following inequality is obtained:

$$\pi\omega_0{}^2 \leq n\frac{\omega_0 \omega_1}{2\pi} \tag{5.2}$$

This inequality is organized, the following relational expression is obtained. However, this expression is matched with the experiment result and shows a threshold coefficient:

$$\frac{2\pi^2}{n} \omega_0 \leq \omega_1 \tag{5.3}$$

<Calculation of Output>

The energy of the body of rotation of the device is given by:

$$\frac{n}{2} I \omega_1{}^2 + nmr^2\omega_0 \tag{6.1}$$

However, since the above work is performed in rotational movement, the energy is not conserved.

Thus, the total energy of the device is defined by:

$$E_n = \frac{n}{2} I \omega_1{}^2 + nmr^2 \omega_0 + \acute{E}_n = const \qquad (6.2)$$

$E'_n$ is outflow energy or injection energy obtained by the rotation of the parent rotor.

When a total amount of energy of the device does not change, both the sides are differentiated by time t, the following equation is obtained:

$$\frac{dE_n}{dt} = nI\omega_1 \frac{d\omega_1}{dt} + \frac{d\acute{E}_n}{dt} = 0 \qquad (6.3)$$

Therefore,

$$nI\omega_1 \frac{d\omega_1}{dt} = -\frac{d\acute{E}_n}{dt} \qquad (6.4)$$

thus,

$$nI\omega_1 d\omega_1 = -d\acute{E}_n \qquad (6.5)$$

is obtained.

Since this equation is a separate variable differential equation, when both the sides are integrated and given with a boundary condition,

$$\acute{E}_n = -\frac{n}{2} I \omega_1{}^2 \qquad (6.6)$$

is obtained.

Since $E'_n$ is given by:

$$\acute{E}_n = -\frac{n}{2} I \omega_1{}^2 \qquad (6.7)$$

when both the sides are multiplied by a frequency f of movement:

$$f = \frac{\omega_0}{2\pi} \qquad (6.8)$$

a work rate of inflow or outflow energy is given by:

$$\acute{E}_n f = -\frac{n}{4\pi} I \omega_1{}^2 \omega_0 \qquad (6.9)$$

Consider movement as shown in FIG. 3(b). In this case,

$$\text{centripetal acceleration} = \frac{\omega_1{}^2}{\omega_0} \qquad (6.10)$$

However, according to the explanation of the <"Smooth" Change> described above, similarly,

$$\text{centripetal angular acceleration} = 2\widehat{\omega_0} \qquad (6.11)$$

is satisfied.

Since the unit of the centripetal acceleration is [rad/s/s],

$$\text{centripetal acceleration} = \frac{2}{\pi}\omega_0 \qquad (6.12)$$

is satisfied.

Thus, as an equation for the centripetal acceleration, according to (6.10) and (6.12), the following equation is satisfied:

$$\frac{\omega_1{}^2}{\omega_0} = \frac{2}{\pi}\omega_0 \qquad (6.13)$$

When this equation is transformed,

$$\frac{\omega_1{}^2}{2} = \frac{\omega_0{}^2}{\pi} \qquad (6.14)$$

is satisfied.

When the equation is substituted into Equation (6.9),

$$\acute{E}_n f = \frac{nl}{2\pi^2}\omega_0{}^2\omega_0 \qquad (6.15)$$

is satisfied.

On the other hand, the unit of $E'_n f$ is [J/s], which is [Nm/s] and also a rate of work. Therefore, both the sides of the above equation is divided by $r\omega_0$, the following equation is obtained:

$$\frac{\acute{E}_n f}{r\omega_0} = \frac{nl}{2\pi^2 r}\omega_0{}^2 \qquad (6.16)$$

This has a force dimension, and this result is also matched with the results of the experiment.

More specifically, an output (propulsive force) F is obtained as a result expressed by:

$$F = \frac{nl}{2\pi^2 r}\omega_0{}^2 = \frac{nma^2}{4\pi^2 r}\omega_0{}^2 \qquad (6.17)$$

This is a parallel acceleration, and is also matched with a result of a verification experiment (will be described below).

<Reason why Child Rotor Needs Flexible Binding (Slipping Mechanism)>

In this device, as described above, entire energy is not conserved. Therefore, the total amount of energy continuously changes. More specifically, although the child rotor is controlled to have a constant rotating speed, the rotating speed is tried to be changed. Since the law of inertia hates the change, the change has to go somewhere. Therefore, in order to prevent the rotating speed of the child rotor from being changed and the total amount of movement energy of the device from being changed, the child rotor needs flexible binding to let rotation go away, i.e., a slipping mechanism. For this reason, the child rotor is attached to a rotating drive shaft (shaft) of a child drive motor with a small screw, and has flexible binding such that the child rotor slips on the rotating drive shaft. The flexible binding (slipping mechanism) can be achieved by a mechanism which allows, in addition to binding using a small screw, binding using friction of rubber, and slipping of a magnetic fluid or the like, and other mechanisms.

<Verification Experiment and Consideration>

[Preliminary Experiment]

A preliminary experiment was executed by a simple apparatus. In this experiment, propulsive force generated by the propulsive force generating device according to the present invention was preliminarily measured.

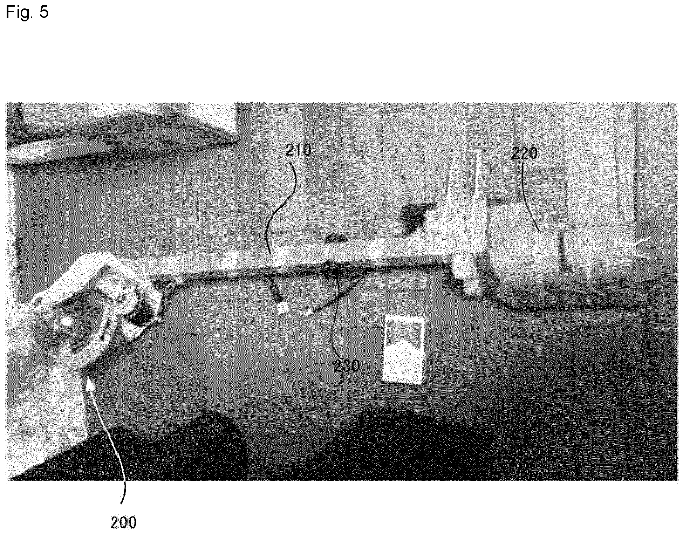

The propulsive force generating device according to the present invention is arranged in parallel and attached to one end of an arm. In this case, it was confirmed in the preliminary experiment that the device operated without touching it. This propulsive force generating device is shown in FIG.5.

In this apparatus, a propulsive force generating device 200 was arranged on one end of an arm 210. A counter weight 220 was arranged on the other end of the arm 210 and rotatably supported with a rotating shaft 230. In this example, when the propulsive force generating device 200 is driven, the arm 210 rotates about the rotating shaft 230. In this example, the propulsive force generating device 200 itself was formed such that two child bodies of rotation could be rotatably arranged on a parent body of rotation and were covered with a capsule therearound. In this manner, it was confirmed that the operation was not operated by aerodynamic force. However, it cannot be determined whether the operation was caused by generation of propulsive force or vibration.

In this apparatus, the moment of inertia of the child body of rotation was defined as $1.6 \times 10^{-5}$ [kg·m$^2$], a distance r from the center of the parent body of rotation to the gravity center of the child body of rotation was defined as 0.04 [m], a mass m of the child body of rotation was defined as 0.043 [kg], a radius a of the child body of rotation was defined as 0.0275 [m], and n was defined as [2], the parent body of rotation and the child body of rotation could be rotated to rotating speeds 500 [rpm] and 6000 [rpm], respectively. The drive of the apparatus was radio-controlled.

According to the above theory, although propulsive force depended on a rotating speed, the dependence could not be confirmed. The apparatus was required to be improved to perform measurement verification. In this case, an apparatus in which a rotating speed was changed was manufactured, and a relationship between the rotating speed and an output was examined.

[Theory about Rotating Speed and Output]

Detailed calculation of an output is described above, and a method of distinguishing vibration from propulsive force is described here. A propulsive force generating device is arranged to output propulsive force in the vertical direction, and suspensibly fixed to be allowed to vertically vibrate. If the device generates only vibration, the average of outputs should be about 0. Also when the outputs are averaged, the average is not about 0 and is biased. It is recognized that propulsive force is generated. In addition, if reproducibility of output is present, the reproducibility can be considered as propulsive force.

[Verification Experiment]

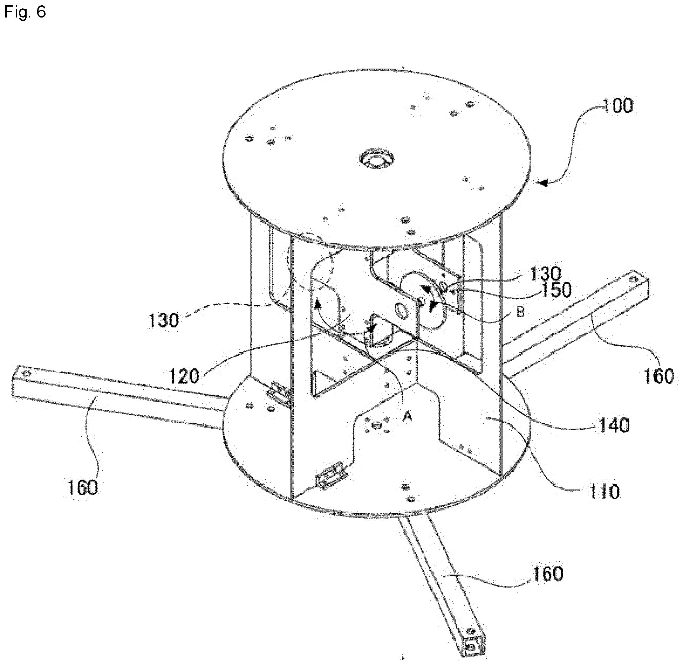

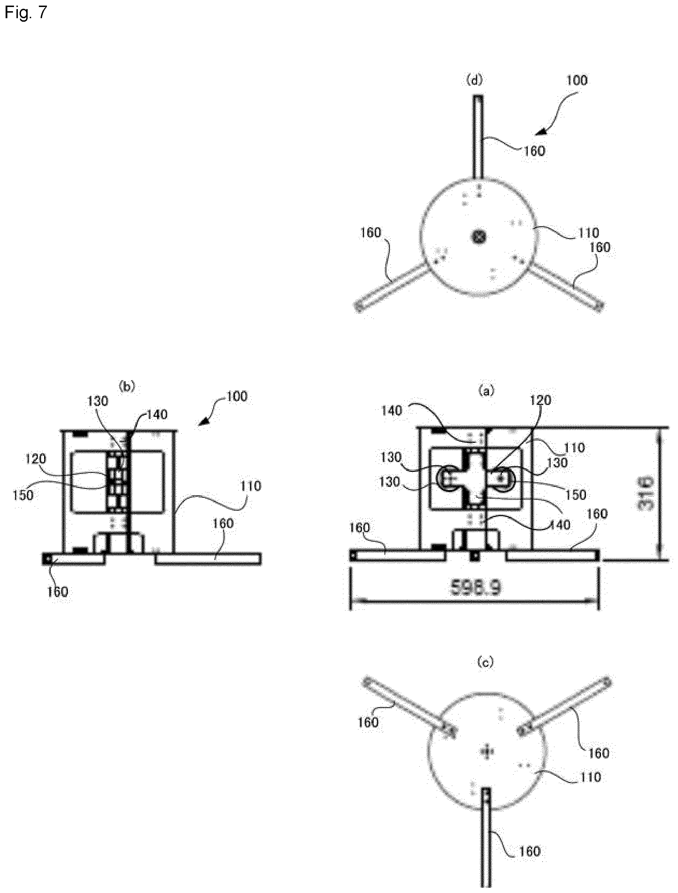

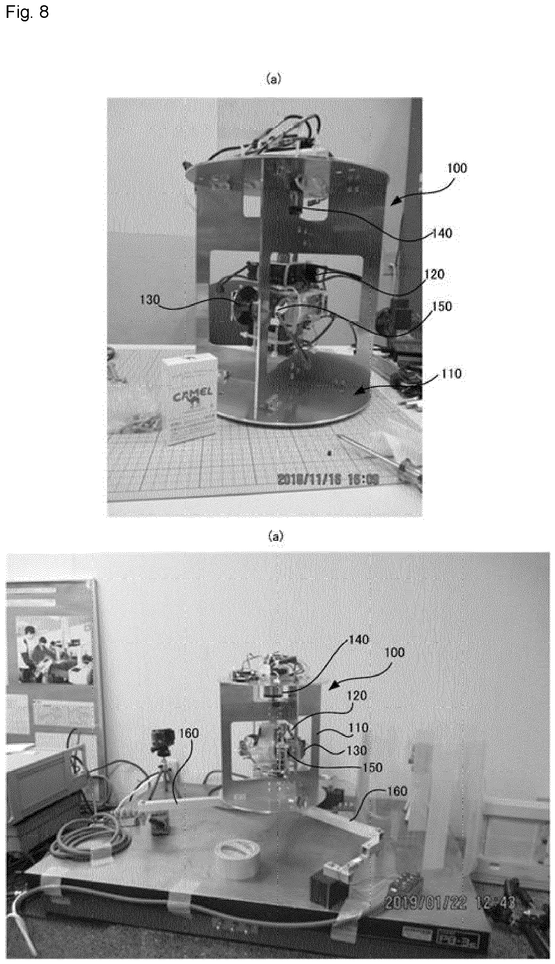

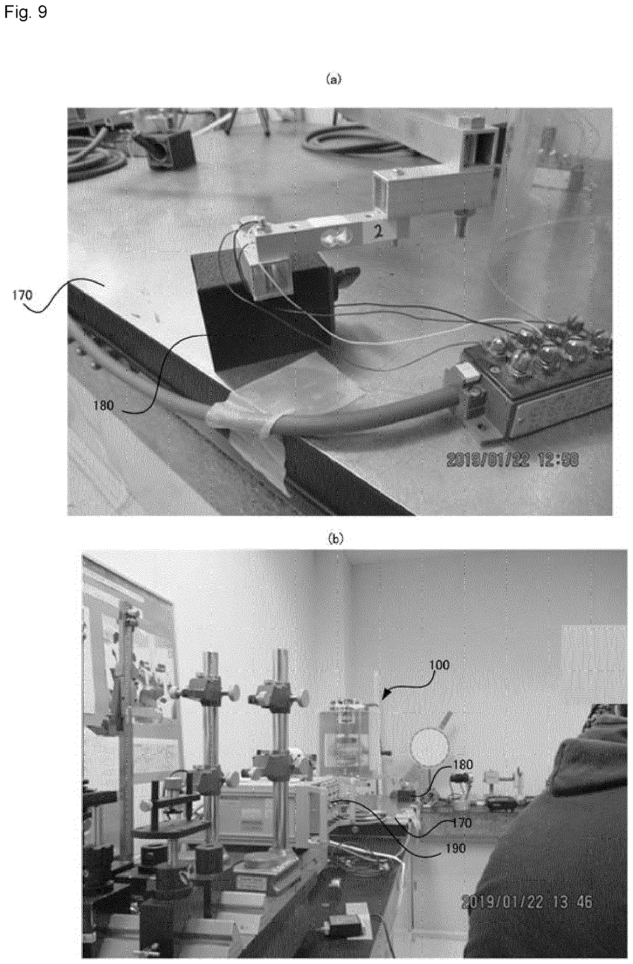

An experimental device will be described below. FIG. 6 is a perspective view showing a device used in a demonstration experiment of the propulsive force generating device according to the present invention. FIGS. 7(a) to 7(d) are diagrams showing the device used in the demonstration experiment of the propulsive force generating device according to the present invention, wherein FIG. 7(a) is a front view, FIG. 7(b) is a side view, FIG. 7(c) is a bottom view, and FIG. 7(d) is a plan view. FIGS.8(a) and 8(b) and FIGS. 9(a) and 9(b) are photographs showing states of the demonstration experiment.

As shown in FIGS. 6 and 7, in a propulsive force generating device 100, a parent rotor 120 is arranged as a parent body of rotation in a frame body 110, and child rotors 130 serving as child bodies of rotation are arranged on the parent rotor 120. The parent rotor 120 is rotationally driven by a rotating device 140 having a motor as indicated by an arrow A. As the child rotors 130, two child rotors are arranged at positions facing each other on the parent rotor 120. The child rotors 130 are rotationally driven by a child rotor drive device 150 having a motor as indicated by an arrow B. At this time, the child rotors 130 are fixed to the rotating drive shaft of the child rotor drive device 150 with small screws (hexagon socket set screws). As a result, the child rotors 130 are flexibly bound to the rotating shaft of the child rotor drive device 150 such that the child rotors 130 can slip on the rotating shaft. The child rotors 130 are rotated while rotating the parent rotor 120. A character 160 in the drawings shows three legs formed on the frame body 110. In the demonstration experiment (will be described later), the propulsive force generating device 100 may be arranged upside down, and the legs 160 may be removed in the drawings.

In the propulsive force generating device 100, the parts are driven by a radio control system such that the propulsive force generating device 100 can be touchlessly operated. In the experiment, the entire propulsive force generating device 100 is entirely covered with a transparent cover such that an influence of aerodynamic force can be neglected.

In the propulsive force generating device 200 according to the embodiment, an inertia $I_1$ of the child body of rotation is defined as 4.8 x 10$^{-5}$ [kg·m$^2$], a distance r from the center of the parent body of rotation to the gravity center of the body of rotation is defined as 0.06 [m], a mass m of the child body of rotation is defined as 0.078 [kg], a radius a of the child body of rotation is defined as 0.035 [m], and n is defined as [2], and the parent body of rotation and the child body of rotation can be rotated to rotating speeds of 1000 [rpm] and 10000 [rpm], respectively.

[Measurement System]

FIGS. 8(a) and 8(b) and FIGS. 9(a) and 9(b) are photographs showing states of the demonstration experiment. As shown in FIGS. 9(a) and 9(b), the entire device is supported on a surface table 170 through load cells 180 at three points. In this manner, movement of the center of gravity is measured. In addition, the load cells are digitized by an A/D converter 190 through a bridge circuit, and resultant data is loaded on a computer.

The rotating speeds of the parent rotor 120 and the child rotors 130 were measured by a stroboscopic system. As a result, it was confirmed that there was virtually no difference in data sent from a radio-control sensor to a transmitter. For this reason, the value of the radio-control sensor was recorded as a rotating speed.

As shown in FIG. 9(a), the base is fixed on the surface table with a magnet and kept in a horizontal position.

[Experiment Method]

An aerodynamic cover is laid over the propulsive force generating device 200. After the the rotating speed of the child rotor is increased to an arbitrary rotating speed, the parent rotor is rotated at an arbitrary value, and 1000 points of outputs from the load cells are read for 40 seconds. Since the rotating speed finely changes, a value which may be considered to be typical is visually read from a display of the transmitter.

Outputs from the three load cells are averaged, and a composite value is employed as the output.

FIG. 9(b) shows an experimental scene.

[Experiment Result]

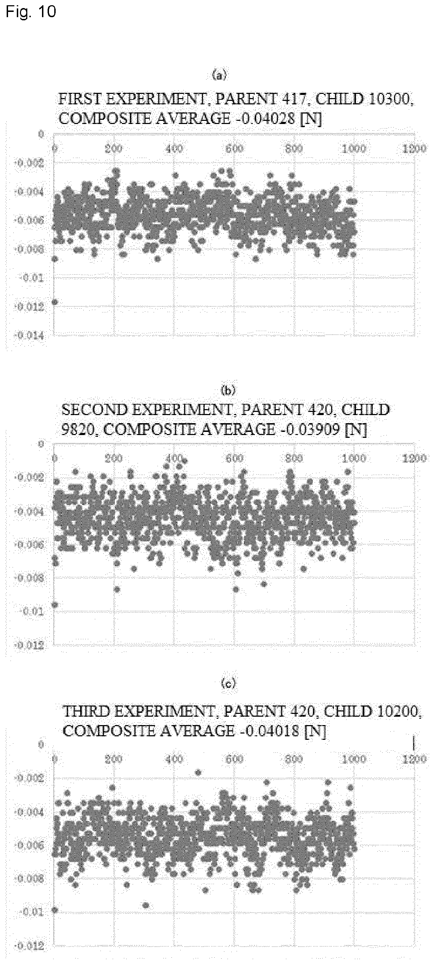

Experiments were conducted on January 29, 2019 and February 7, 2019 at the Precision Measurement Laboratory, Department of Precision Machinery Engineering, College of Science and Technology, Nihon University. The graphs for the experiments will be shown. FIGS. 10(a) to 10(c), FIGS. 11(a) to 11(c), and FIGS. 12(a) to 12(c) are graphs showing a change in propulsive force with respect to a change in rotating speed of the child rotor in the demonstration experiments. In this case, the numerical values described in the titles of the graphs are rotating speeds of the parent rotor and the child rotor, respectively, and have units of [rpm].

The graph shown in FIG. 10(a) shows the first experiment. Results were obtained until the rotating speeds of the parent rotor and the child rotor reach 417 rpm and 10300 rpm, respectively. A composite average of the load cells was -0.04028 [N].

The graph shown in FIG. 10(b) shows the second experiment. Results were obtained until the rotating speeds of the parent rotor and the child rotor reach 420 rpm and 9820 rpm, respectively. A composite average of the load cells was -0.03909 [N].

The graph shown in FIG. 10(c) shows the third experiment. Results were obtained until the rotating speeds of the parent rotor and the child rotor reach 420 rpm and 10200 rpm, respectively. A composite average of the load cells was -0.04018 [N]. Significant vibration could not be observed in the device in the first experiment to the third experiment.

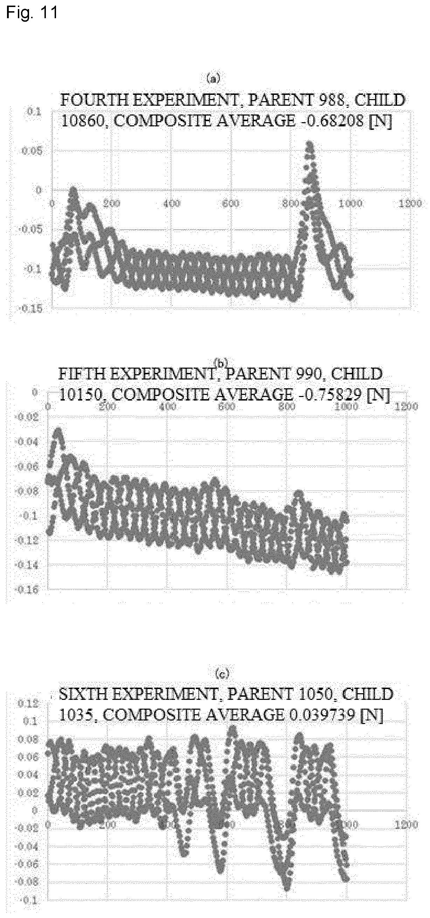

The graph shown in FIG. 11(a) shows the fourth experiment. Results were obtained until the rotating speeds of the parent rotor and the child rotor reach 988 rpm and 1960 rpm, respectively. A composite average of the load cells was -0.68208 [N].

The graph shown in FIG. 11(b) shows the fifth experiment. Results were obtained until the rotating speeds of the parent rotor and the child rotor reach 990 rpm and 10150 rpm, respectively. A composite average of the load cells was -0.75829 [N].

The graph shown in FIG. 11(c) shows the sixth experiment. Results were obtained until the rotating speeds of the parent rotor and the child rotor reach 1050 rpm and 10350 rpm, respectively. A composite average of the load cells was -0.039739 [N].

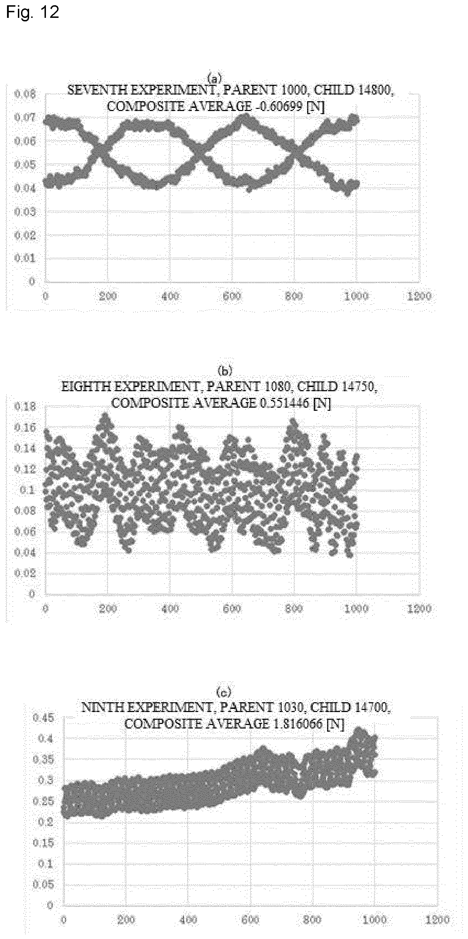

The graph shown in FIG. 12(a) shows the seventh experiment. Results were obtained until the rotating speeds of the parent rotor and the child rotor reach 1000 rpm and 14800 rpm, respectively. A composite average of the load cells was -0.68208 [N].

The graph shown in FIG. 12(b) shows the eighth experiment. Results were obtained until the rotating speeds of the parent rotor and the child rotor reach 1080 rpm and 14750 rpm, respectively. A composite average of the load cells was 0.551446 [N]. In this experiment, although the graph is positive, the composite average is negative. This is considered to be because the zero point of the load cell measurement was off.

The graph shown in FIG. 12(c) shows the ninth experiment. Results were obtained until the rotating speeds of the parent rotor and the child rotor reach 1030 rpm and 14700 rpm, respectively. A composite average of the load cells was 1.816066 [N]. In this experiment, although the graph is positive, the composite average is negative. This is considered to be because the zero point of the load cell measurement was off.

In the fourth experiment to the ninth experiment, vibration was observed in the device.

[Consideration]

In the first experiment to the third experiment in which the rotating speed of the parent rotor was set to about 500 [rpm], it could be seen that vibration is mild and the output center of the load cell had a negative bias. The reproducibility was good, and almost the same numerical values could be obtained.

Since vibration is violent in the fourth experiment to the ninth experiment in which the rotating speed of the parent rotor was set to about 1000 [rpm], results were varied. In the fourth, fifth and seventh experiment, outputs from the load cells has almost the same numerical values. In contrast to this, in the sixth experiment, the eighth experiment and the ninth experiment, numerical values of little relevance were output.

It is determined that the load cells were influenced by the vibration generated in the sixth experiment, the eighth experiment, and the ninth experiment. In contrast to this, almost the same numerical values were output from the load cells in the fourth experiment, the fifth experiment, and the seventh experiment. Therefore, it is determined that the values are significant measurement values.

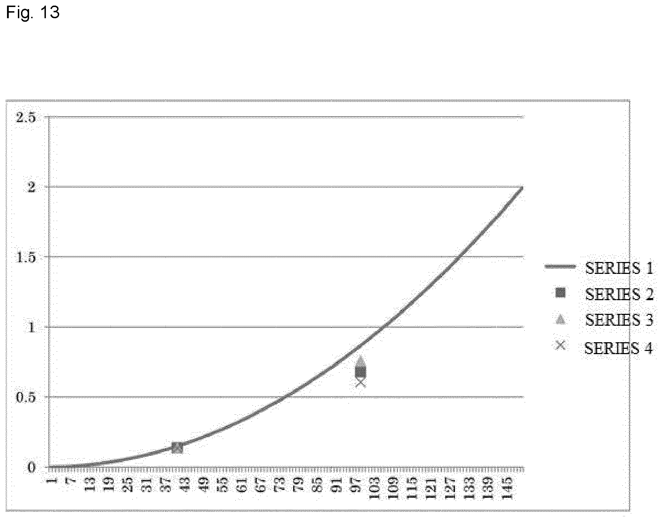

The experimental results are compared with the value obtained by the theoretical consideration. FIG. 13 is a graph showing the results in the demonstration experiment and the theoretical values. In the graph, the ordinate denotes [N], and 10 times value of the values on the abscissa denotes the rotating speed [rpm] of the parent body of rotation (parent rotor). Series 1 indicates the theoretical value, and Series 2, 3, and 4 indicate the experimental values, respectively.

According to FIG. 13, it is found that values close to the theoretical values can be obtained as the experimental values.

As described above, the propulsive force generating device 200 according to the embodiment was able to obtain propulsive force F in accordance with theory. Since this propulsive force generating device 200 is for a demonstration experiment, the scale of the device is small. To actually obtain practical propulsive force, the scale of the propulsive force generating device should be increased. That is, to increase F, it is proportional to the number of n of the child body of rotation, the mass m of the child body of rotation, and the square of the radius of the child body of rotation and inversely proportional to r which is the distance from the center of the parent body of rotation to the center of gravity of the child body of rotation. Therefore, when the number, mass, and the radius of the child body of rotation are increased, the propulsive force F increases.

For example, the moment of inertia $I_1$ of the child body of rotation is set to 0.125 [kg·m$^2$], the distance r to the center of gravity of the child body of rotation is set to 0.7 [m], the mass of the child body of rotation is set to 1.0 [kg], the radius a of the child body of rotation is set to 0.5 [m], n is set to 6, the rotating speed of the parent body of rotation is set to 127 [rpm], and the rotating speed of the child body of rotation is set to 500 [rpm]. In this condition, propulsive force F and a propulsive acceleration can be obtained as 635 [N] and 9.8 [m/s$^2$], respectively. In this manner, an object in the cosmic space can be sufficiently accelerated.

<Additional Experiment and Consideration>

[Additional Experiment]

After the experiment, an additional experiment was performed. The configuration of the device used in the additional experiment is the same as that of the device in the demonstration experiment. In the experimental device described above and the additional experimental device, the parent drive motor for driving the parent rotor and the child drive motor for rotationally driving the child body of rotation are controlled to be driven at predetermined rotating speeds. More specifically, there are no change in the rotating speeds and the angular velocities of the parent rotor, the child rotor, the parent drive motor, and the child drive motor, and there are also no derivatives of the angular velocities.

In this case, in the device in the demonstration experiment, the child rotor and the shaft of the child drive motor were attached to each other by loose fastening with small screws (hexagon socket set screws). When the device was used, as in the demonstration experiment, a phenomenon (phenomenon generating thrust) in which there was a bias at the center of vibration was confirmed. Although measurement of the additional experimental device lacked a stable output, the maximum bias value was 5 [N] as in the result of the verification experiment.

In the device of the additional experiment, the same loose fastening as in the demonstration experiment described above at the beginning. However, since the small screw holding the child body of rotation and the child drive motor loosened and fell out during the experiment, when the child rotor and the shaft of the child body of rotation were bonded (rigidly bonded) to each other by a metal bond, thrust could not be detected, and the parent rotor slipped on the shaft of the parent drive motor (additional experiment 1).

In response to this, furthermore, when the parent rotor and the shaft of the parent drive motor were bonded (rigidly bonded) to each other, no thrust was not detected at all (additional experiment 2).

[Consideration]

The "Taylor expansion of the conservation law of angular momentum" in the <Analysis of Concrete Device> section described above shows that work was done in this constrained movement. Also, when this condition is applied to the "energy conservation law" in the <Calculation of Output> section, under the condition that the rotating speed of the child rotor is not changed, energy corresponding to the amount of work is accumulated so as to try to change the rotating speed of the child rotor.

This is because the "conservation law of angular momentum" tries to keep the same rotating speed for the child rotor, while the "energy conservation law" tries to change the rotating speed. However, since the rotating speed is constant, no change in the rotating speed occurs, and the extra energy is considered to be released as work.

However, if the child rotor and the shaft of the child drive motor are rigidly bonded to each other as in Additional Experiment 2, this energy will be transmitted through the motor shaft and consumed as thermal energy of the motor. Therefore, the child rotor and the shaft of the child drive motor are considered to have to be loosely bonded (flexibly bonded) to each other to provide only constant rotation.

The idea that an output may be caused by friction between the shaft of the child drive motor and the child rotor is denied by the fact that this phenomenon does not occur below the threshold value of the child rotor rotating speed.

[Industrial Applicability]

In the propulsive force generating device and the propulsive force generating method according to the present invention, since propulsive force can be efficiently obtained from rotational movement of the body of rotation without using a propellant such as fuel or oxidizing reagent, an object can be accelerated for a long period of time and moved at an extremely high speed, and can be used in the space industry and other industries.

[Reference Signs List]

    100: propulsive force generating device
    110: frame body
    120: parent rotor (parent body of rotation)
    130: child rotor (child body of rotation)
    140: rotating device
    150: child rotor drive device
    160: leg
    170: surface table
    180: load cell
    190: computer
    200: propulsive force generating device
    210: arm

220: counterweight
230: rotating shaft

**Claims**

1. A propulsive force generating device comprising:

   a parent body of rotation rotatably arranged;
   means for rotationally driving the parent body of rotation at a rotational angular velocity $\omega_0$;
   n (n $\geq$ 1 integer) child bodies of rotation arranged on the parent body of rotation and having rotating axes in the circumferential direction of the parent body of rotation; and means for rotationally driving the child bodies of rotation at a rotational angular velocity $\omega_1$ by flexible binding,
   wherein, the rotational angular velocity $\omega_0$ and the rotational angular velocity $\omega_1$ have the same sign and satisfy the following numerical expression:

   $$\frac{2\pi^2}{n}\omega_0 \leq \omega_1$$

2. The propulsive force generating device according to claim 1, wherein, when an inertia moment of the child body of rotation is defined as $\omega_1$, a distance from the center of the parent body of rotation to the center of gravity of the child body of rotation is defined as r, the mass of the child body of rotation is defined as m, and the radius of the child body of rotation is defined as a,
   propulsive force $F$ in the axial direction of the parent body of rotation is given by:

   $$F = \frac{nI_{yy}}{2\pi^2 r}\omega_0{}^2 = \frac{nma^2}{4\pi^2 r}\omega_0{}^2$$

3. A propulsive force generating method, wherein,

   a rotatably arranged parent body of rotation is rotationally driven at a rotational angular velocity $\omega_0$,
   n (n $\geq$ 1 integer) child bodies of rotation arranged on the parent body of rotation and having rotating axes in the circumferential direction of the parent body of rotation are rotationally driven at a rotational angular velocity $\omega_1$ having the same sign as that of the rotational angular velocity $\omega_0$ of the parent body of rotation by being flexibly bound to means for rotationally driving, and the rotational angular velocity $\omega_0$ and the rotational angular velocity $\omega_1$ have the same sign and satisfy the following numerical expression:

   $$\frac{2\pi^2}{n}\omega_0 \leq \omega_1$$

4. The propulsive force generating method according to claim 3, wherein, when an inertia moment of the child body of rotation is defined as $I_1$, a distance from the center of the parent body of rotation to the center of gravity of the child body of rotation is defined as r, the mass of the child body of rotation is defined as m, and the radius of the child body of rotation is defined as a,
   propulsive force $F$ in the axial direction of the parent body of rotation is given by:

   $$F = \frac{nI_{yy}}{2\pi^2 r}\omega_0{}^2 = \frac{nma^2}{4\pi^2 r}\omega_0{}^2$$

Fig. 1

(a)

(b)

$$\{x-(e\cdot x)e\}\cos\theta+(e\times x)\sin\theta$$

Fig. 2

CENTRAL AXIS OF ROTATION

ROTATIONAL
ANGULAR
VELOCITY $\omega_0$
OF CENTER

ROTATIONAL AXIS
ANGULAR
VELOCITY $\omega_1$

Fig. 3

(a)

$\pi\omega_0{}^2$

$\omega_0$

$\omega_0$

$\omega_0$

(b)

RADIUS

FREQUENCY

Fig. 4

(a)

ANGULAR VELOCITY $\omega_0$
OF PARENT ROTOR

10

DISTANCE r BETWEEN CENTER
OF PARENT ROTOR AND
CENTER OF CHILD ROTOR

20

ANGULAR VELOCITY $\omega_1$
OF CHILD ROTOR

z

y

x

(b)

MASS m AND
RADIUS a OF
CHILD ROTOR

20

ANGULAR VELOCITY $\omega_1$

Fig. 5

Fig. 6

Fig. 7

Fig. 8

(a)

(a)

Fig. 9

(a)

(b)

Fig. 10

(a)

FIRST EXPERIMENT, PARENT 417, CHILD 10300,
COMPOSITE AVERAGE -0.04028 [N]

(b)

SECOND EXPERIMENT, PARENT 420, CHILD
9820, COMPOSITE AVERAGE -0.03909 [N]

(c)

THIRD EXPERIMENT, PARENT 420, CHILD 10200,
COMPOSITE AVERAGE -0.04018 [N]

Fig. 11

(a)

FOURTH EXPERIMENT, PARENT 988, CHILD 10860, COMPOSITE AVERAGE -0.68208 [N]

(b)

FIFTH EXPERIMENT, PARENT 990, CHILD 10150, COMPOSITE AVERAGE -0.75829 [N]

(c)

SIXTH EXPERIMENT, PARENT 1050, CHILD 1035, COMPOSITE AVERAGE 0.039739 [N]

Fig. 12

(a)
SEVENTH EXPERIMENT, PARENT 1000, CHILD 14800,
COMPOSITE AVERAGE -0.60699 [N]

(b)
EIGHTH EXPERIMENT, PARENT 1080, CHILD 14750,
COMPOSITE AVERAGE 0.551446 [N]

(c)
NINTH EXPERIMENT, PARENT 1030, CHILD 14700,
COMPOSITE AVERAGE 1.816066 [N]

Fig. 13

## INTERNATIONAL SEARCH REPORT

International application No.

PCT/JP2020/023083

### A. CLASSIFICATION OF SUBJECT MATTER
Int. Cl. F03G3/08(2006.01)i
FI: F03G3/08 Z

According to International Patent Classification (IPC) or to both national classification and IPC

### B. FIELDS SEARCHED

Minimum documentation searched (classification system followed by classification symbols)
Int. Cl. F03G3/08

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 4-86375 A (KAJIYAMA, Akiyoshi) 18 March 1992, page 2, lower right column, line 18 to page 3, upper left column, line 20, fig. 5, 6 | 1-4 |
| Y | JP 2012-137082 A (SHIBATA, Eisaku) 19 July 2012, paragraph [0044], fig. 1, 2 | 1-4 |
| Y | WO 2008/001415 A1 (SUZUKI, Kazuyoshi) 03 January 2008, paragraphs [0032]-[0080], fig. 9-11 | 1-4 |
| Y | JP 2003-83237 A (IMANARI, Kimiyoshi) 19 March 2003, paragraphs [0005]-[0008], fig. 1-3 | 1-4 |
| Y | JP 2003-91208 A (RICOH CO., LTD.) 28 March 2003, paragraphs [0007]-[0009], fig. 2, 3 | 1-4 |

☒ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07.08.2020 | 18.08.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2020/023083

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 3065820 U (MIKI PULLEY CO., LTD.) 08 February 2000, paragraphs [0010]-[0014], fig. 1 | 1-4 |
| A | WO 2017/149789 A1 (NARAHARA, Yutaka) 08 September 2017, paragraphs [0001]-[0016], fig. 1-4 | 1-4 |
| A | JP 4-507276 A (DELROY MORTIMER S) 17 December 1992 | 1-4 |
| A | GB 2466682 A (WHEELDON, Cyrill Parsonage) 07 July 2010 | 1-4 |

Form PCT/ISA/210 (continuation of second sheet) (January 2015)

**INTERNATIONAL SEARCH REPORT**

Information on patent family members

| | International application No. |
|---|---|
| | PCT/JP2020/023083 |

| Patent Documents referred to in the Report | Publication Date | Patent Family | Publication Date |
|---|---|---|---|
| JP 4-86375 A | 18.03.1992 | (Family: none) | |
| JP 2012-137082 A | 19.07.2012 | (Family: none) | |
| WO 2008/001415 A1 | 03.01.2008 | US 2009/0108136 A1 paragraphs [0083]- [0101], fig. 9-11 | |
| JP 2003-83237 A | 19.03.2003 | (Family: none) | |
| JP 2003-91208 A | 28.03.2003 | (Family: none) | |
| JP 3065820 U | 08.02.2000 | (Family: none) | |
| WO 2017/149789 A1 | 08.09.2017 | JP 2017-155633 A US 2019/0048857 A1 EP 3425200 A1 paragraphs [0001]- [0016], fig. 1-4 CA 3015057 A1 CN 108700043 A KR 10-2018-0107199 A | |
| JP 4-507276 A | 17.12.1992 | US 5090260 A WO 1991/002155 A1 | |
| GB 2466682 A | 07.07.2010 | (Family: none) | |

Form PCT/ISA/210 (patent family annex) (January 2015)

**EP 4 166 784 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 56106076 A
- JP 4019368 A
- JP 8270543 A
- JP 2003083237 A
- JP 2004169691 A